# EUROPÄISCHE PATENTSCHRIFT

(11) **EP 2 859 249 B1**
(45) Veröffentlichungstag und Bekanntmachung des Hinweises auf die Patenterteilung: **09.01.2019**
(21) Anmeldenummer: 13730817.7
(22) Anmeldetag: 30.05.2013
(51) Int. Cl.: B23K 26/22, B23K 31/02, F16F 1/04, F16F 1/12

(54) **VERBINDUNG VON FEDERENDEN**
CONNECTION OF SPRING ENDS
ASSEMBLAGE DES EXTRÉMITÉS D'UN RESSORT

(30) Priorität: 11.06.2012 CH 805122012
(43) Veröffentlichungstag der Anmeldung: 15.04.2015
(73) Patentinhaber: Baumann Federn AG, 8630 Rüti (CH)
(72) Erfinder: MEIER, Roland, 8636 Wald (CH); SCHEIDEGGER, David, 8632 Tann (CH); HOHL, Andreas, 8630 Rüti (CH)
(74) Vertreter: Troesch Scheidegger Werner AG
(86) Internationale Anmeldenummer: PCT/EP2013/061167
(87) Internationale Veröffentlichungsnummer: WO 2013/186059

(56) Entgegenhaltungen:
- DE-B1- 2 429 390
- US-A- 2 991 064
- US-A- 4 880 217

## Beschreibung

Die vorliegende Erfindung betrifft eine Verbindung zweier Federenden eines Federstranges gemäss dem Oberbegriff nach Anspruch 1, wie insbesondere zu einer Schlauchfeder oder einem Ringfederstrang wie beispielsweise zu einer Miniaturringfeder mit gekippten Windungen oder einer Miniaturschlauchfeder. Weiter betrifft die vorliegende Erfindung ein Verfahren zum Verbinden zweier Federenden bzw. die Herstellung einer Ringfeder mit gekippten Windungen oder einer Schlauchfeder, wie insbesondere in miniaturisierter Grösse.

Bekannt sind solche Federringstränge unter dem Namen Schlauchfedern bzw. Ringfederstränge mit gekippten Windungen. Im englischen Sprachgebrauch sind sie bekannt als sogenannte "garter spring", bzw. canted coil spring. Solche Federn werden u.a. beispielsweise für Dichtungen, elektrische Kontakte, und mechanischen Steckverbindungen eingesetzt.

Üblicherweise werden die beiden Enden je eines Federstranges formschlüssig miteinander zu einer Schlauchfeder verbunden, indem das eine Ende einen kleineren Durchmesser aufweist und dieses Ende in das andere Ende geschraubt wird. Solche Schlauchfedern werden beispielsweise beschrieben in der US 2 530 163, der US 3 186 701 sowie der US 4 880 217. Ein Nachteil dabei ist, dass diese Verschraubung zu einer grossen Versteifung über mehrere Windungen führt. Insbesondere bei sehr kleinen Federschläuchen wirkt diese Versteifung störend.

In der Regel werden die beiden Enden einer Ringfeder mit gekippten Windungen stoffschlüssig mittels Schweissung miteinander verbunden. Solche Ringfedern mit gekippten Windungen werden beispielsweise beschrieben in der US 2004/0245686 oder der US 2010/0090379. Die Art der Verbindung wird dabei nicht genauer beschrieben, sondern in einer Figur nur als Punkt angedeutet ohne näher darauf einzugehen. Bzw. werden in beiden Patentschriften nur formschlüssige Verbindungen beschrieben. In der US 3 323 785 wird die Verbindung der beiden Enden angedeutet mit "formed into an annulus by suitably attaching the opposite ends of the spring to each other", aber die Schrift geht nicht weiter darauf ein. In der US 3 468 527 wird beschrieben, dass die Enden zusammengeschweisst werden ohne darauf einzugehen, wie die Schweissung im detail zu erfolgen hat und welche Form sie haben soll ("the ends joined together by welding to form a unitary annulus").

Nebst der stoffschlüssigen Verbindung der beiden Federenden eines Federstranges mit gekippten Enden sind auch formschlüssige Verbindung mit besonders gestalteten Endformen bekannt, wie z.B. in der US 2004/0245686 beschrieben. Diese haben den Nachteil dass sie eine Veränderung der Steifheit der Feder im Bereich der Verbindung bewirken, welche sich nachteilig auf die Funktion der Feder auswirken kann.

In Umfangsrichtung nebeneinander anliegende Endwindungen können auch zu einer unzulässig grossen Verkleinerung des Federweges der Feder im Bereich der Verbindung führen. Dies bedeutet dass die Feder mit gekippten Windungen im Verbindungsbereich weniger zusammengepresst werden kann als der andere Teil der Feder und so in ihrer vollen Funktion eingeschränkt wird.

Auch ist die Feinpositionierung der beiden Federenden zueinander für die Herstellung der Verbindung, insbesondere bei sehr kleinen Schlauchfedern und bei Ringfederen mit oder ohne gekippten Windungen nicht zufriedenstellend gelöst. Bei sehr kleinen Schlauchfedern und Federsträngen mit oder ohne gekippten Windungen ist die korrekte Positionierung der beiden Enden zueinander sehr schwierig, sowohl bezüglich der Zentrierung gegeneinander, als bezüglich der Positionierung in Umfangsrichtung zur Verhinderung eines Luftspaltes zwischen den beiden Enden.

Entsprechend besteht die Aufgabe der vorliegenden Erfindung darin, Federenden vorzuschlagen, derart, dass das Verbinden dieser Enden auch bei kleinst- bzw. miniaturisierten Federn wie insbesondere kleinsten Schlauchfedern und Federsträngen mit oder ohne gekippte Windungen erstens nicht zu einer Versteifung der Verbindung führt, zweitens nicht zu einer unzulässigen Beschränkung des Federweges des Federstranges mit gekippten Windungen und drittens beim Zusammenführen der Enden eine korrekte Positionierung ermöglicht.

Erfindungsgemäss wird die gestellte Aufgabe mittels einer Verbindung gemäss dem Wortlaut nach Anspruch 1 gelöst.

Die vorliegende Erfindung löst das Problem der korrekten Positionierung mittels einer geeigneten Formgestaltung der Federenden. Beide Enden eines Federstranges sind in einer besonderen Form gestaltet, so dass das eine Ende sich beim Positionieren leicht in das andere Ende desselben Federstranges anlegen lässt und die exakte Positionierung der beiden Enden gewährleistet. Erreicht wird dies, indem der Windungsdurchmesser jeder Endwindung mindestens im Bereich je der beiden Enden verringert ist und die Steigung der Endwindung im Bereich je des Endes gegenüber der Steigung im Federkörper vergrössert ist. Wenn die Enden korrekt positioniert sind, werden diese miteinander stoffschlüssig verbunden. Diese stoffschlüssige Verbindung, im Gegensatz zu einer kraftschlüssigen oder formschlüssigen Verbindung, besteht nur über einen kurzen Abschnitt der beiden Endwindungen. Mit dieser Verbindung wird die Versteifung der Feder an der Verbindungsstelle sehr stark verkleinert und liegt in der Grösse der Steifigkeit einer Windung innerhalb des Federstranges wo keine Verbindungsstelle besteht. Bei Federsträngen mit gekippten Windungen kann die Verbindungsstelle so klein gestaltet werden, dass diese etwa gleich viel zusammengepresst werden kann wie der übrige Teil des Stranges. Die Federfunktion der Feder wird am Ende ihres Arbeitsbereichs nur minimal behindert. Das bedeutet dass der Arbeitsbereich grösser gestaltet werden kann als bei einer herkömmlichen Ringfeder mit stark überlappenden Endwindungen.

Der Federstrang besteht aus einem Material, welches eine stoffschlüssige Verbindung zulässt, d.h. beispielsweise schweissbar, lötbar oder klebbar ist. Insbesondere können das Metalllegierungen wie Federstahl, rostfreier Stahl, Kupferlegierungen, Titan oder andere geeignete Metalle oder Metalllegierungen sein, oder aber auch Kunststoffe oder Keramik können verwendet werden.

Die erfindungsgemäss vorgeschlagene Verbindung von Federenden eines Federstranges ist beispielsweise geeignet, um eine sogenannte Schlauchfeder herzustellen, wie insbesondere eine Miniaturschlauchfeder oder auch eine Ringfeder mit gekippten Windungen wie sie in Verbindungelementen für elektrische und/ oder mechanische Verbindungen oder auch Dichtelementen eingesetzt werden. Selbstverständlich ist die erfindungsgemäss vorgeschlagene Verbindung aber grundsätzlich geeignet, um Enden von einem Federstrang miteinander zu verbinden.

Weitere Ausführungsvarianten der Verbindung und insbesondere ein Verfahren zum Verbinden zweier Enden eines Federstranges sind in abhängigen und weiteren Ansprüchen definiert.

Die Erfindung wird nun beispielsweise und unter Bezug auf die beigefügten Figuren näher erläutert.

Dabei zeigen:
- Fig. 1a, 1b und 1c: schematisch, in Längsansicht, einen geraden Federstrang mit Windungen ohne Abstand, aufweisend Federenden, welche geeignet sind, um eine erfindungsgemäss definierte Verbindung herzustellen, wobei 1b und 1c die Enden in Draufsicht zeigen,
- Fig. 2a, 2b und 2c: schematisch, in Längsansicht, einen geraden Federstrang mit Windungen mit Abstand zwischen den Windungen, aufweisend Federenden, welche geeignet sind, um eine erfindungsgemäss definierte Verbindung herzustellen, wobei 2 b und 2c die Enden in Draufsicht zeigen,
- Fig. 3a, 3b und 3c: schematisch, in Längsansicht einen gekippten Federstrang mit Windungen mit Abstand zwischen den Windungen, aufweisend Federenden, welche geeignet sind, um eine erfindungsgemässe Verbindung herzustellen, wobei 3b und 3c die Enden in Draufsicht zeigen,
- Fig. 4: schematisch eine erfindungsgemässe Verbindung zu einem geschlossenen Ring, und
- Fig. 5: ausschnittsweise, die Verbindung zweier Federenden des geschlossenen Ringes aus Figur 4.

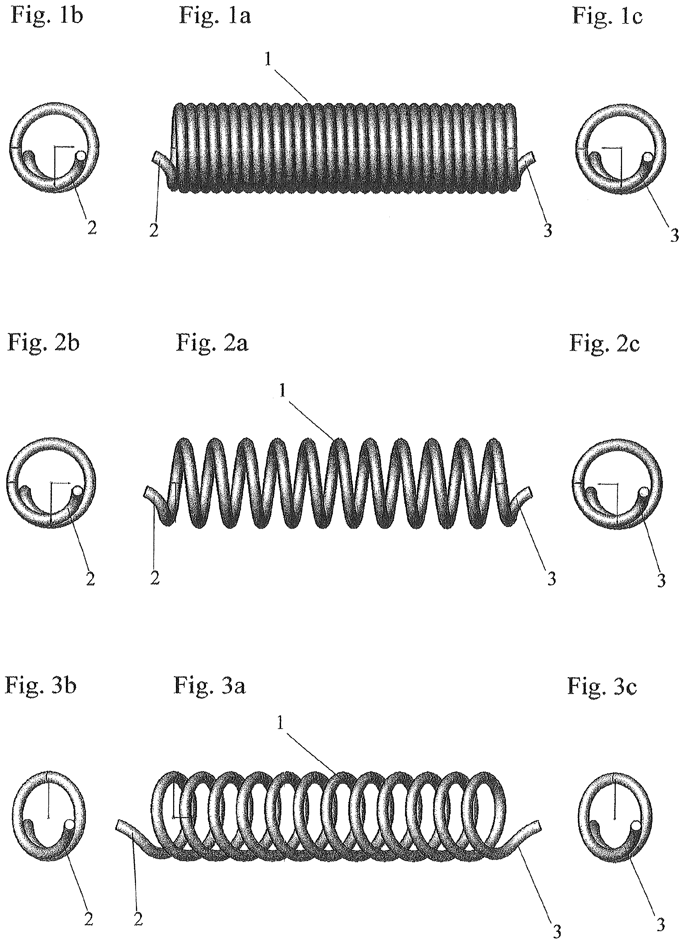

Figur 1a zeigt in Längsansicht einen Federstrang 1, aufweisend zwei Enden 2 und 3, geeignet für die Herstellung einer erfindungsgemässen Verbindung. Der Federstrang besteht dabei aus Windungen welche ohne Windungsabstand aneinander anliegen. Dabei erkennbar ist, dass im Bereich je der beiden Enden 2 und 3 die Steigung jeder Endwindung vergrössert ist gegenüber der Steigung der Windungen im übrigen Federkörper. Die Figuren 1b und 1c zeigen die beiden Enden in Draufsicht, wobei hier nun deutlich erkennbar ist, dass der Windungsdurchmesser jeder Endwindung der beiden Enden 2 und 3 verkleinert ist gegenüber dem Windungsdurchmesser im übrigen Federkörper.

Figur 2a zeigt in Längsansicht einen Federstrang 1, aufweisend zwei Enden 2 und 3, geeignet für die Herstellung einer erfindungsgemässen Verbindung. Der Federstrang besteht dabei aus Windungen welche einen Windungsabstand aufweisen und nicht aneinander anliegen. Wiederum ist aus 2a erkennbar, dass die Steigung je im Bereich der beiden Enden 2 und 3 vergrössert ist gegenüber der Steigung im übrigen Federkörper. Auch zeigen die Figuren 2b und 2c in Draufsicht der beiden Enden erneut, wie der Windungsdurchmesser je der Endwindungen verkleinert ist im Vergleich zu dem Windungsdurchmesser im übrigen Federkörper.

Figur 3a zeigt in Längsansicht einen Federstrang 1, aufweisend zwei Enden 2 und 3, geeignet für die Herstellung einer erfindungsgemässen Verbindung. Der Federstrang besteht dabei aus gekippten Windungen welche einen Windungsabstand aufweisen, nicht aneinander anliegen und über jeweils eine Windung eine halbe Windung grosse positive und eine halbe Windung negative oder nur leicht positive Steigung aufweisen und so einen Federstrang mit gekippten Windungen bilden.

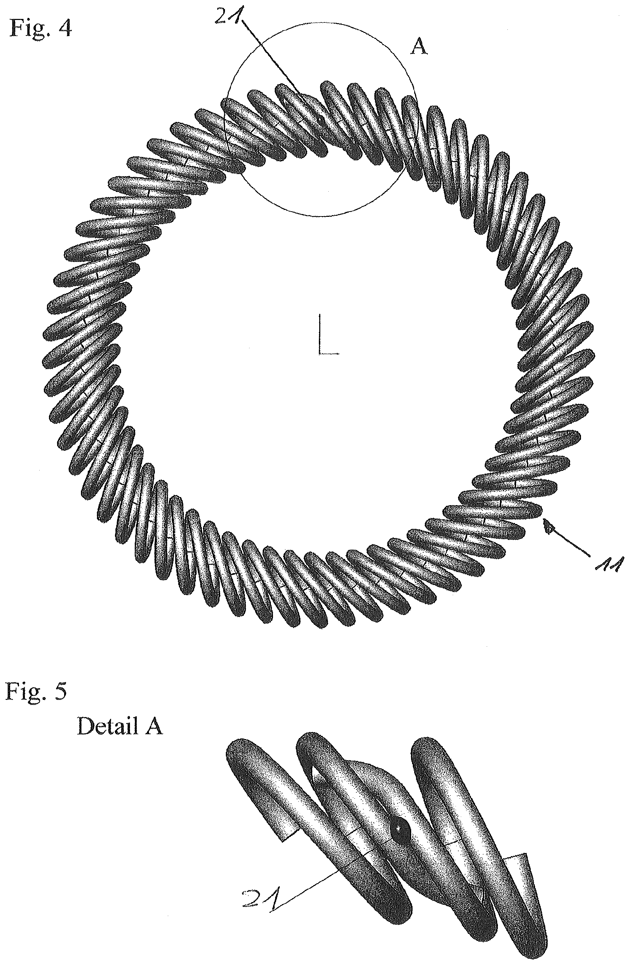

Die Enden 2 und 3, wie dargestellt in den Figuren 1, 2 und 3 sind bezüglich ihres Windungsdurchmessers über eine bestimmte Länge des Drahtes um beispielsweise einen Drahtdurchmesser verjüngt. Auch stehen die beiden Enden über eine bestimmte Länge des Drahtes axial mehr ab als die Windungen des übrigen Federstranges, was durch eine grössere Windungssteigung erreicht wird. Wenn der Federstrang zu einem Ring gebogen und die Enden zueinander positioniert werden, ermöglicht diese spezielle Endenform eine selbsttätige genaue Endpositionierung. Sie gewährleisten damit dass die beiden Enden in der Endpositionierung fluchten und sich berühren, so dass die beiden Enden stoffschlüssig verbunden werden können, wie beispielsweise zur Bildung eines geschlossenen Ringes 11, wie in Fig. 4 dargestellt.

In Fig. 5 ist ausschnittsweise die Verbindung der beiden Federenden aus Fig. 4 dargestellt, wodurch das Verbinden ein geschlossener Ring gebildet wird. Der Ausschnitt ist in Fig. 4 mit A bezeichnet. Dabei zeigt Fig. 5 eine Punktschweissung 21 zwischen den beiden Federenden 2 und 3 des Federstranges 1. Diese Verbindung wird vorzugsweise mittels Schweissen hergestellt, beispielsweise mit Laserschweissen oder Plasmaschweissen.

Anstelle des Schweissens ist es selbstverständlich auch möglich, die beiden Windungen durch Kleben oder Löten miteinander zu verbinden. Wichtig dabei ist, dass das für den Federstrang verwendete Material eine Schweissung, Lötung oder ein Kleben ermöglicht. Aus diesem Grunde hat sich beispielsweise rostfreier Stahl als geeignetes Material angeboten, wobei sich selbstverständlich auch andere Metalle oder Metalllegierungen wie insbesondere Kupfer, Kupferlegierungen, Titan, Goldlegierungen etc. eignen. Insbesondere für Kleben sind auch Kunststoffe verwendbar, wie beispielsweise verstärkte Kunststoffe, welche das Herstellen von Federsträngen zulassen.

Die Darstellung in den Fig. 1-5 der beiden Enden des Federstranges ist beispielsweise und dient der Erläuterung der vorliegenden Erfindung. Selbstverständlich können insbesondere die Verjüngung der Enden in ihrer Länge unterschiedlich sein. Auch kann das axiale Abstehen der Enden unterschiedlich gross sein und über eine unterschiedliche Länge des Drahtabschnittes erfolgen. Ebenso kann die Ueberlappung der beiden Enden, welche entsteht wenn der Federstrang zu einem Ringe geformt wird unterschiedlich gross sein. Selbstverständlich können diese unterschiedlichen Ausprägungen der Federenden in Kombination erfolgen.

## Patentansprüche

1. Verbindung zweier Federenden (2,3) eines Federstranges (1), **dadurch gekennzeichnet, dass** der Windungsdurchmesser der Endwindungen mindestens im Bereich je der beiden Enden (2,3) verringert ist und die Steigung der Endwindungen im Bereich je der beiden Enden gegenüber der Steigung im Federkörper vergrössert ist und dass die beiden Enden sich um einen Abschnitt aneinander anliegend überlappen und stoffschlüssig miteinander verbunden sind.

2. Verbindung nach Anspruch 1, **dadurch gekennzeichnet, dass** der Windungsdurchmesser im Bereich je der Enden um mindestens einen Drahtdurchmesser verkleinert ist.

3. Verbindung nach Anspruch 1 oder 2, **dadurch gekennzeichnet, dass** die Steigung der Endwindung im Bereich je der beiden Enden um je mindestens einen halben Drahtdurchmesser vergrössert ist.

4. Verbindung nach einem der Anspräche 1 bis 3, **dadurch gekennzeichnet, dass** der Federstrang aus Windungen ohne Abstand zwischen den Windungen besteht mit Ausnahme im Bereich je der Enden mit erhöhter Windungssteigung.

5. Verbindung nach einem der Ansprüche 1 bis 3, **dadurch gekennzeichnet, dass** der Federstrang aus Windungen mit Abstand zwischen den Windungen besteht.

6. Verbindung nach einem der Ansprüche 1 bis 3 oder 5, **dadurch gekennzeichnet, dass** der Federstrang aus der orthogonal zur Federlängsachse liegenden Ebene gekippten Windungen mit Abstand zwischen den Windungen besteht.

7. Verbindung nach einem der Ansprüche 1 bis 6, **dadurch gekennzeichnet, dass** die Windungsdurchmesser-Verkleinerung je der beiden Enden über maximal eine halbe Windung führt.

8. Verbindung nach einem der Ansprüche 1 bis 7, **dadurch gekennzeichnet, dass** die Vergrösserung der Windungssteigung je der beiden Enden über maximal eine halbe Windung führt.

9. Verbindung nach einem der Ansprüche 1 bis 8, **dadurch gekennzeichnet, dass** die stoffschlüssige Verbindung aus einem oder mehreren Punkten oder aus einer mindestens partiell umlaufenden Linie besteht.

10. Verbindung nach einem der Ansprüche 1 bis 9, **dadurch gekennzeichnet, dass** die Verbindung eine Schweissverbindung, beispielsweise bestehend aus geschweissten Verbindungspunkten besteht oder eine Löt- oder Klebeverbindung ist.

11. Verbindung nach einem der Ansprüche 1 bis 10, **dadurch gekennzeichnet, dass** der Federstrang aus rostfreiem Stahl, Kupfer oder einer Kupferlegierung, einer Schweiss- oder lötbaren Metalllegierung, aus Kunststoff oder einem anderen Material besteht, das zu einem Draht formbar ist und stoffschlüssig verbindbar ist.

12. Verfahren zur Herstellung eines Ringfederstranges mit einer Verbindung wie definiert in einem der Ansprüche 1 bis 11, **dadurch gekennzeichnet, dass** die Federenden eines Federstranges, wie definiert in einem der Ansprüche 1 bis 11 miteinander stoffschlüssig zum Bilden des Ringfederstranges verbunden werden.

13. Verfahren nach Anspruch 12, **dadurch gekennzeichnet, dass** die stoffschlüssige Verbindung der beiden Federenden mittels Laserschweissen erfolgt.

## Claims

1. A connection between two spring ends (2,3) of a spring strand (1), **characterized in that** the winding diameter of the end windings is decreased at least in the area of each of the two ends (2,3), and a pitch of the end windings is increased in the area of each of the two ends with respect to the pitch of the body of the spring, and the two ends by a section rest against and overlap each other and are connected to each other by means of adhesive bonding.

2. The connection according to claim 1, **characterized in that** the wire diameter is reduced in the area of each of the ends by at least a wire diameter.

3. The connection according to claim 1 or 2, **characterized in that** the pitch of the end windings in the area of each of the two ends is increased by at least half of the wire diameter.

4. The connection according to one of claims 1 to 3, **characterized in that** the spring strand comprises a plurality of the windings without spaces between the windings except in the area of each of the ends with the increased winding pitch.

5. The connection according to one of claims 1 to 3, **characterized in that** the spring strand comprises a plurality of windings with spaces between the windings.

6. The connection according to one of claims 1 to 3 or 5, **characterized in that** the spring strand comprises a plurality of windings tilted out of the plane lying at a right angle to a longitudinal axis of the spring, with spaces between the windings.

7. The connection according to one of claims 1 to 6, **characterized in that** the decrease in the winding diameter at each of the two ends extends over no more than half a winding.

8. The connection according to one of claims 1 to 7, **characterized in that** the increase in the winding pitch at each of the two ends extends over no more than half a winding.

9. The connection according to one of claims 1 to 8, **characterized in that** the adhesive bonding comprises one or more points or a line extending at least partially circumferentially.

10. The connection according to one of claims 1 to 9, **characterized in that** the connection is a welded connection, e.g. including spot welds, a brazed connection, or an adhesively bonding.

11. The connection according to one of claims 1 to 10, **characterized in that** the spring strand comprises stainless steel, copper, or a copper alloy, a weldable or brazable metal alloy, plastic, or another material which can be formed into a wire and which can be connected by means of adhesive bonding.

12. A method for producing a spring strand having a connection as recited in one of claims 1 to 11, **characterized in that** the spring ends of a spring strand as recited in one of claims 1 to 11 are connected to each other by means of adhesive bonding for forming the spring strand.

13. The method according to claim 12, **characterized in that** the adhesive bonding of the two spring ends is performed by means of laser welding.

## Revendications

1. Assemblage de deux extrémités (2, 3) d'un ressort (1), **caractérisé en ce que** le diamètre de spire des spires d'extrémité est réduit au moins dans la zone des deux extrémités (2, 3) et l'inclinaison des spires d'extrémité est augmentée dans la zone des deux extrémités par rapport à l'inclinaison au niveau du corps du ressort, et **en ce que** les deux extrémités se chevauchent de façon adjacente sur une section et s'assemblent par correspondance de matière.

2. Assemblage selon la revendication 1, **caractérisé en ce que** le diamètre de spire est réduit d'au moins un diamètre de fil dans la zone de chacune des extrémités.

3. Assemblage selon la revendication 1 ou 2, **caractérisé en ce que** l'inclinaison de la spire d'extrémité est augmentée d'au moins un demi-diamètre de fil dans la zone de chacune des deux extrémités.

4. Assemblage selon l'une des revendications 1 à 3, **caractérisé en ce que** le ressort est constitué de spires sans espacement entre les spires, à l'exception de la zone des extrémités où l'inclinaison des spires est augmentée.

5. Assemblage selon l'une des revendications 1 à 3, **caractérisé en ce que** le ressort est constitué de spires avec un espacement entre les spires.

6. Assemblage selon l'une des revendications 1 à 3 ou 5, **caractérisé en ce que** le ressort est constitué de spires inclinées de façon orthogonale par rapport à l'axe longitudinal du ressort, avec un espacement entre les spires.

7. Assemblage selon l'une des revendications 1 à 6, **caractérisé en ce que** la diminution du diamètre de spire des deux extrémités se fait sur maximum une demi-spire.

8. Assemblage selon l'une des revendications 1 à 7, **caractérisé en ce que** l'augmentation de l'inclinaison des spires des deux extrémités se fait sur maximum une demi-spire.

9. Assemblage selon l'une des revendications 1 à 8, **caractérisé en ce que** l'assemblage par correspondance de matière est composé d'un ou plusieurs points ou d'une ligne au moins partiellement périphérique.

10. Assemblage selon l'une des revendications 1 à 9, **caractérisé en ce que** l'assemblage est composé d'un assemblage soudé, par exemple composé de points d'assemblage soudés, ou est un assemblage brasé ou collé.

11. Assemblage selon l'une des revendications 1 à 10, **caractérisé en ce que** le ressort est constitué d'acier inoxydable, de cuivre ou d'un alliage de cuivre, d'un alliage métallique soudable ou brasable, de plastique ou d'un autre matériau pouvant être façonné en un fil et être assemblé par correspondance de matière.

12. Procédé pour fabriquer un ressort circulaire avec un assemblage tel que défini dans l'une des revendications 1 à 11, **caractérisé en ce que** les extrémités d'un ressort peuvent être assemblées par correspondance de matière, comme défini dans l'une des revendications 1 à 11, pour former le ressort circulaire.

13. Procédé selon la revendication 12, **caractérisé en ce que** l'assemblage par correspondance de matière des deux extrémités de ressort se fait par soudage laser.
